## Europäisches Patentamt

## European Patent Office

## Office européen des brevets

(19)

(11) Veröffentlichungsnummer: **0 287 070**
**B1**

(12) ## EUROPÄISCHE PATENTSCHRIFT

(45) Veröffentlichungstag der Patentschrift:
**03.10.90**

(51) Int. Cl.⁵: **F16B 7/04,** H02B 1/015

(21) Anmeldenummer: **88105888.7**

(22) Anmeldetag: **13.04.88**

(54) **Anordnung zurlösbaren Verbindung zweier stumpf aneinanderstossender Rohre.**

(30) Priorität: **14.04.87 DE 8705531 U**

(43) Veröffentlichungstag der Anmeldung:
**19.10.88 Patentblatt 88/42**

(45) Bekanntmachung des Hinweises auf die Patenterteilung:
**03.10.90 Patentblatt 90/40**

(84) Benannte Vertragsstaaten:
**CH DE FR GB IT LI**

(56) Entgegenhaltungen:
**EP-A- 0 166 982**
**DE-B- 2 255 407**
**FR-A- 2 468 022**
**US-A- 2 762 639**
**US-A- 2 997 317**

(73) Patentinhaber: **Siemens Aktiengesellschaft,
Wittelsbacherplatz 2, D-8000 München 2(DE)**

(72) Erfinder: **Pönisch, Heinz, Hirtenweg 6,
D-7500 Karlsruhe(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Anordnung zur lösbaren Verbindung zweier stumpf aneinanderstoßender Rohre, mit einem in die Rohre einschiebbaren zylindrischen Verbindungsstück und Mitteln zu dessen Festlegung.

Eine derartige Rohrverbindung ist beispielsweise aus der DE-B 2 255 407 bekannt. Das Verbindungsstück zwischen zwei stumpf aneinanderstoßenden Rohren wird dort durch ein die Stoßfuge überbrückendes, aufweitbares Innenrohr gebildet, in welches wiederum Innenhülsen eingesetzt sind mit als Schrauben ausgebildeten Spanndornen, mit Hilfe derer das Innenrohr aufgeweitet und gegen die Innenwände der zu verbindenden Rohre gedrückt wird. Es handelt sich hier um eine im wesentlichen kraftschlüssige Verbindung, die eine definierte Festlegung der beiden Rohre in axialer Richtung nicht zuläßt. Eine weitere ähnliche Verbindung ist in der US-A 2 997 317 beschrieben. Das Verbindungsstück der beiden fluchtend zusammenzufügenden Rohre ist dort eine längsgeschlitzte zylindrische Hülse, in welcher eine Druckplatte angeordnet ist, die mittels Schrauben gegen die Innenwand der Hülse gepreßt werden kann. Auch hier handelt es sich um eine im wesentlichen kraftschlüssige Verbindung. Eine definierte räumliche Festlegung der Rohre in axialer Richtung ist auch hier nicht erreichbar.

Die bekannten Vorrichtungen sind deshalb wenig geeignet, wenn es auf eine präzise räumliche Festlegung der Verbindungsstellen der Rohre ankommt, wie es insbesondere beim Aneinanderreihen von Sektionen für Schaltpulte oder -tafeln der Wartentechnik der Fall ist.

Es besteht demgemäß die Aufgabe, eine Vorrichtung zu schaffen, die aus wenigen einfach herzustellenden Teilen aufgebaut und leicht zu montieren ist und welche es gestattet, stumpf aneinanderstoßende Rohre auch in axialer Richtung in definierter Lage zu verbinden.

Die Aufgabe läßt sich mit einer Anordnung der eingangs genannten Art lösen, welche die Merkmale des Anspruchs 1 aufweist.

Die eigentliche Vorrichtung besteht aus lediglich vier Teilen: dem als Drehteil leicht herstellbaren zylindrischen Verbindungsstück mit zwei Querbohrungen, einem Spannstift (Kerbstift), einer Kugel und einer Stiftschraube, die als genormte Handelsware zu beziehen sind.

Beim Aufbau von Schaltsektionen sind an den Verbindungsstellen häufig platten- oder streifenförmige Seitenteile als seitliche Begrenzung oder als Spante in die Rohrverbindung einzuhängen. Mit Hilfe eines geeignet gestalteten Sicherungselementes können die Seitenteile einesteils an dem Rohr befestigt werden, anderenteils diese zugleich gegen Verdrehen gesichert werden. Die zum Lösen bzw. zum Spannen der Verbindung notwendigen Teile der Vorrichtung bleiben jederzeit leicht zugänglich.

Zur Erläuterung der Erfindung sind in den Figuren 1 bis 4 Ausführungsbeispiele dargestellt und im folgenden beschrieben.

Figur 1 zeigt einen Längsschnitt durch eine erfindungsgemäße Rohrverbindung,
Figur 2 einen Querschnitt.
In Figur 3 sind in einer Explosionszeichnung die Teile der Vorrichtung sowie eine Verdrehsicherung dargestellt,
Figur 4 zeigt diese Anordnung in zusammengebautem Zustand.

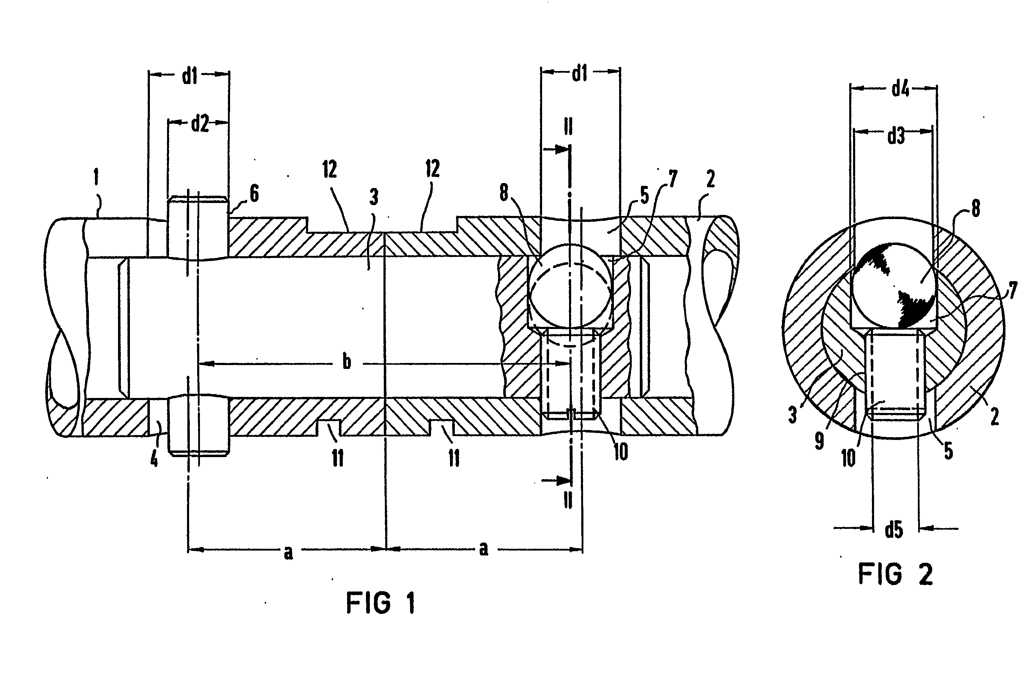

Figur 1 und 2: Die beiden zu verbindenden Rohre 1 und 2 gleichen Durchmessers stoßen mit ihren Stirnflächen stumpf aneinander. Im Endabschnitt jedes der Rohre 1 und 2 ist eine jeweils durchgehende Querbohrung 4 und 5 mit dem Durchmesser $d_1$ im Abstand a von dem jeweiligen Rohrende angebracht.

In einem zylindrischen Verbindungsstück 3 ist in einem Endabschnitt eine Querbohrung angebracht zur Aufnahme eines Spannstifts 6, dessen Länge größer ist als der Außendurchmesser des Rohrs 1 und dessen Durchmesser $d_2$ kleiner ist als der Durchmesser $d_1$ der Querbohrung 4. Wie aus der Figur 1 zu erkennen ist, ragt der Spannstift 6 beidseitig durch die Querbohrung 4.

In dem gegenüberliegenden Endabschnitt des Verbindungsstücks 3 ist eine radial gerichtete Sackbohrung 7 angebracht, deren Durchmesser $d_3$ größer ist als der Durchmesser $d_1$ der Querbohrung 5. Der Abstand b der Mittelachsen von Spannstift 6 und Sackbohrung 7 ist kleiner als der Abstand 2a der Achsen der Querbohrungen 4, 5.

Die Sackbohrung 7 ist so ausgelegt, daß darin eine Stahlkugel 8 nach DIN 5401 mit Gleitsitz verschiebbar angeordnet ist, wobei die Tiefe der Sackbohrung 7 größer oder gleich dem Durchmesser $d_4$ der Kugel ist.

In die Sackbohrung 7 mündet koaxial eine Gewindebohrung 9, deren Durchmesser $d_5$ kleiner ist als der Durchmesser $d_3$ der Sackbohrung. In die Gewindebohrung 9 ist eine Stiftschraube 10 einschraubbar, deren Ende die Kugel 8 berührt.

Da der Abstand b zwischen den Mittelachsen von Spannstift 6 und Sackbohrung 7 kleiner ist als der Abstand 2a der Querbohrungen 4 und 5 in den Rohren 1 und 2, legt sich beim Einschrauben der Stiftschraube 10 die Kugel 8 an den inneren Rand der Querbohrung 5 an und verkeilt sich dort beim weiteren Einschrauben. Der Keilwinkel α zwischen Kugelradius und dem Radiusvektor auf den Berührungspunkt mit der Kante der Querbohrung 5 liegt zwischen 30° und 45°.

Die so gegeneinander verspannten Rohre 1 und 2 lassen sich durch Lösen der Stiftschraube 10 leicht wieder trennen.

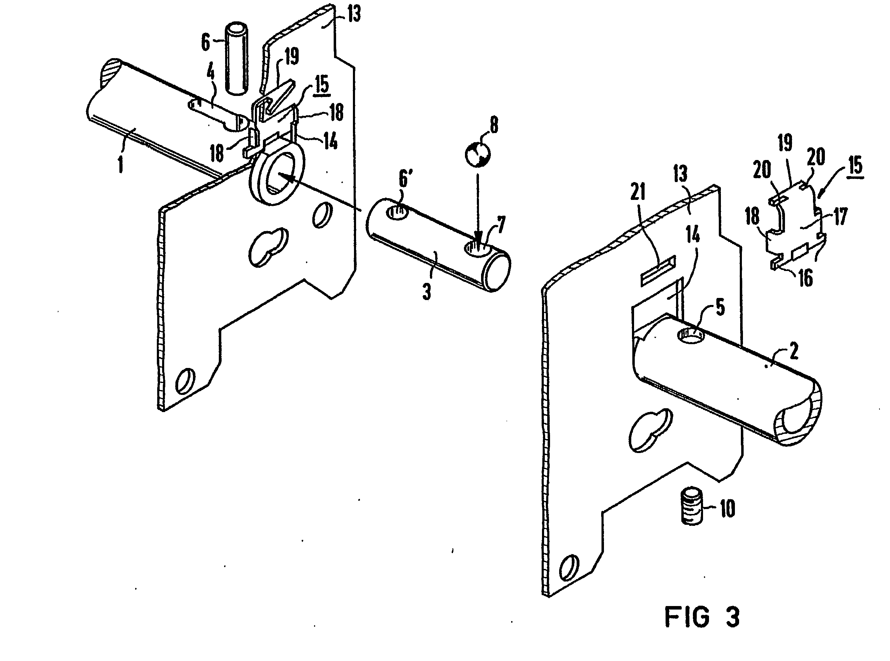

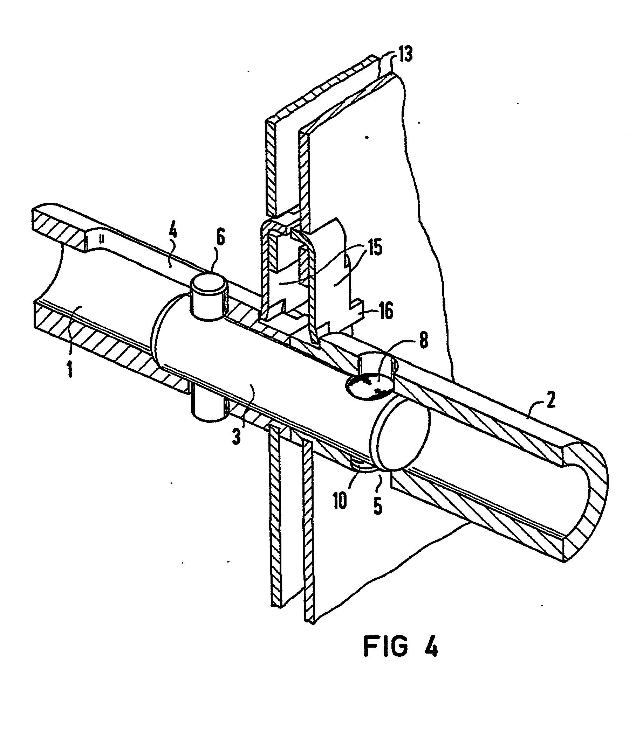

Aus Figur 3 läßt sich die Art und Weise der Montage erkennen. In die Sackbohrung 7 des zylindrischen Verbindungsstücks 3 wird die Kugel 8 eingelegt und das Verbindungsstück dann in das Rohr 1 eingefügt. Durch die Querbohrung 4 im Rohr 1, die, wie gezeigt, auch als Langloch ausgeführt sein kann, wird der Spannstift 6 in die Querbohrung 6′ des Verbindungsstücks 3 eingeschlagen, sodann wird das Rohr 2 aufgeschoben und durch seine Querbohrung 5 von unten her die Stiftschraube 10 in das Verbindungsstück 3 eingeschraubt, so daß die stumpf aneinanderstoßenden Rohre 1 und 2 durch die Keilwirkung der Kugel 8 gegeneinander verspannt werden, wie Figur 4 zeigt.

Zum Aufbau von Rahmengestellen für Schaltpulte oder Schaltschränke werden für die Querverbindungen zwischen den parallellaufenden Rohren platten- oder streifenförmige Seitenteile, auch Spanten genannt, benützt, die Öffnungen aufweisen, mit welchen sie in Nuten an den Rohrenden einhängbar sind. Häufig wird dabei gefordert, daß die Rohrverbindungen gegen Verdrehen zu sichern. Bei der Vorrichtung gemäß der Erfindung ist in einer Weiterbildung ein Sicherungselement vorgesehen, welches in Verbindung mit den aufgeschobenen Seitenteilen die Rohre gegen Verdrehen sichert.

Dazu sind, wie Figur 1 zeigt, an jedem der Rohre 1 und 2 in geringem Abstand von seinem Ende eine in Radialebene umlaufende Nut 11 angebracht. Ferner weisen die Rohrenden bis in etwa Nuttiefe reichende Abflachungen 12 auf, die sich in Ebenen senkrecht zu den Mittelachsen der Querbohrungen 4 und 5 erstrecken. Zum Befestigen von Seitenteilen 13 für den Gestellaufbau sind diese mit Öffnungen 14 versehen (siehe Figur 3), deren Umriß aus drei rechtwinklig aneinanderstoßenden Geraden und einem Kreisbogen besteht. In diese Öffnungen 14 ist das jeweilige Rohrende mit seiner Nut 11 einhängbar. Zur Sicherung der Seitenteile 13 und der Rohre 1 und 2 gegen Verdrehen ist auf jeder Seite ein Sicherungselement 15 vorgesehen, welches sich einerseits an dem Seitenteil 13, andererseits mit seiner Unterkante auf der Abflachung 12 aufstehend an dem Rohr 1 bzw. 2 abstützt.

Das Sicherungselement 15 besteht aus einem im wesentlichen rechteckigen Blechbiegeteil 17 mit einer sich in seitlichen Vorsprüngen 16 fortsetzenden Unterkante, die länger ist als die lichte Weite der Öffnung 14 in horizontaler Richtung. Das Sicherungselement 15 weist ferner zwei aus den Seitenkanten des Blechbiegeteils 17 heraustretende und senkrecht dazu abgebogene Lappen 18 auf, deren äußerer Abstand der lichten Weite der Öffnung 14 entspricht, so daß sie in diese einfügbar sind. Die Oberkante 19 des Sicherungselements 15 ist ebenfalls senkrecht zur Ebene des Blechbiegeteils 17 abgebogen und weist zwei seitliche Einschnitte 20 auf. Oberhalb der Öffnungen 14 in den Seitenteilen 13 ist jeweils ein Schlitz 21 angebracht, durch welchen die abgebogene Oberkante 19 des Sicherungselements 15 gesteckt wird. Durch leich tes Verdrehen der Oberkante 19 läßt sich, wie im linken Teil der Figur 3 zu erkennen ist, das Sicherungselement 15 mit der Platte 13 formschlüssig verbinden, wodurch gleichzeitig alle Teile gegeneinander gegen Verdrehen und Verschieben in Achsrichtung gesichert sind, siehe auch Figur 4.

**Patentansprüche**

1. Anordnung zur lösbaren Verbindung zweier stumpf aneinanderstoßender Rohre, mit einem in die Rohre einschiebbaren zylindrischen Verbindungsstück und Mitteln zu dessen Festlegung, gekennzeichnet durch

- je eine durchgehende Querbohrung (4, 5) mit dem Durchmesser (d1) im Abstand (a) vom Rohrende jedes Rohres (1, 2);
- einen in dem einen Endabschnitt des Verbindungsstücks (3) angebrachten, durch die Querbohrung (4) des einen Rohres (1) greifenden Spannstift (6), dessen Länge größer oder gleich dem Außendurchmesser des Rohres (1) ist und dessen Durchmesser (d2) kleiner ist als der Durchmesser (d1) der Querbohrung (4);
- eine radial gerichtete Sackbohrung (7) in dem anderen Endabschnitt des Verbindungsstücks (3), deren Durchmesser (d3) größer ist als der Durchmesser (d1) der Querbohrung (5), wobei der Abstand (b) zwischen den Mittelachsen von Spannstift (6) und Sackbohrung (7) kleiner ist als der Abstand (2a) der Achsen der Querbohrungen (4, 5);
- eine Metallkugel (8), deren Durchmesser (d4) kleiner oder gleich der Tiefe der Sackbohrung (7) ist und die darin mit Gleitsitz verschiebbar angeordnet ist;
- eine koaxial in die Sackbohrung (7) mündende Gewindebohrung (9), deren Durchmesser (d5) kleiner ist als der Durchmesser (d3) der Sackbohrung (7);
- eine in die Gewindebohrung (9) einschraubbare Stiftschraube (10), deren Ende die Kugel (8) berührt.

2. Anordnung nach Anspruch 1, dadurch gekennzeichnet, daß der Keilwinkel ( ) zwischen Kugelradius und dem Radiusvektor auf den Berührungspunkt mit der Unterkante der Querbohrung (5) zwischen 30° und 45° liegt.

3. Anordnung nach Anspruch 1 zur Verbindung einzelner Bauabschnitte einer Gestellanordnung, dadurch gekennzeichnet, daß jedes der Rohre (1, 2) in geringem Abstand von seinem Ende eine in einer Radialebene umlaufende Nut (11) aufweist, die in einer sich in einer Ebene senkrecht zu der Achse der Querbohrung (4, 5) bis zum Rohrende erstreckende Abflachung (12) der Rohrwand mündet, und daß jeweils ein plattenförmiges Seitenteil (13) einer Gestellanordnung eine Öffnung (14) deren Umriß aus drei rechtwinklig zusammenstoßenden Geraden und einem halbkreisförmigen Abschnitt besteht aufweist, in welche das jeweilige Rohrende mit seiner Nut (11) einhängbar ist und daß ein Sicherungselement (15) sich einerseits an dem Seitenteil (13), andererseits an der Abflachung (12) des Rohrs (1, 2) abstützt.

4. Anordnung nach Anspruch 3, dadurch gekennzeichnet, daß das Sicherungselement (15) ein im wesentlichen rechteckiges Blechbiegeteil (17) ist, mit einer sich in zwei seitlichen Vorsprüngen (16) fortsetzenden Unterkante, die länger ist als die horizontale lichte Weite der Öffnung (14)mit zwei aus den senkrechten Seitenkanten des Blechbiegeteils (17) heraustretenden und unter einem Winkel von 90° abgebogenen Lappen (18), deren Abstand der lichten Weite der Öffnung (14) entspricht,mit einer abgebogenen Oberkante (19), die in einen Schlitz (21) in dem Seitenteil (13) oberhalb der Öffnung (14) einführ- undmit dem Teil (13) formschlüssig verbindbar ist.

## Claims

1. Arrangement for the detachable connection of two abutting tubes, having a cylindrical connection piece which can be pushed into the tubes and means for its fixation, characterised by
- respectively a through cross bore hole (4, 5) with the diameter (d1) at a distance (a) from the tube end of each tube (1, 2);
- a dowel pin (6) which is provided in the one end section of the connection piece (3), engages through the cross bore hole (4) of the one tube (1) and the length of which is greater than or equal to the outside diameter of the tube (1) and the diameter (d2) of which is smaller than the diameter (d1) of the cross bore hole (4);
- a radially directed blind bore hole (7) in the other end section of the connection piece (3), the diameter (d3) of which is greater than the diameter (d1) of the cross bore hole (5), with the distance (b) between the central axes of dowel pin (6) and blind bore hole (7) being smaller than the distance (2a) between the axes of the cross bore holes (4, 5);
- a metal ball (8), the diameter (d4) of which is smaller than or equal to the depth of the blind bore hole (7) and which is arranged in a displaceable manner therein with sliding fit;
- a threaded bore hole (9) which leads coaxially into the blind bore hole (7) and the diameter (d5) of which is smaller than the diameter (d3) of the blind bore hole (7);
- a stud bolt (10) which can be screwed into the threaded bore hole (9) and the end of which contacts the ball (8).

2. Arrangement according to claim 1, characterised in that the wedge angle ($\alpha$) between the ball radius and the radius vector in relation to the contact point with the lower edge of the cross bore hole (5) lies between 30° and 45°.

3. Arrangement according to claim 1 for the purpose of connecting individual constructional sections of a rack arrangement, characterised in that each of the tubes (1, 2) has, at a short distance from its end, a groove (11) which runs round it in a radial plane and which opens in a flattened portion (12) of the tube wall extending in a plane perpendicular to the axis of the cross bore hole (4, 5) as far as the tube end and in that, in each case, a plate-like side portion (13) of a rack arrangement has an opening (14), the profile outline of which consists of three straight lines meeting at right angles and a semi-circular section and into which the respective tube end can be suspended by its groove (11) and in that a securing element (15) is supported, on the one hand, on the side portion (13) and, on the other hand, on the flattened portion (12) of the tube (1, 2).

4. Arrangement according to claim 3, characterised in that the securing element (15) is a substantially rectangular bent sheet metal portion (17) having a lower edge which continues in two lateral projections (16) and which is longer than the horizontal clear width of the opening (14), having two lugs (18) which protrude from the perpendicular side edges of the bent sheet metal portion (17), are turned aside at an angle of 90° and the distance between which corresponds to the clear width of the opening (14), having a turned-aside upper edge (19) which can be inserted into a slot (21) in the side portion (13) above the opening (14) and which can be connected in a form-locking manner with the portion (13).

## Revendications

1. Dispositif de raccordement amovible de deux tubes bout à bout, comprenant une pièce de liaison cylindrique, susceptible d'être enfilée dans les tubes, et des moyens pour son immobilisation, caractérisé par
- un perçage transversal (4, 5) continu de diamètre (d1), à distance (a) de l'extrémité de chaque tube (1, 2);
- une goupille de blocage (6) prévue dans l'un des tronçons d'extrémité de la pièce de liaison (3), pénétrant dans le perçage transversal (4) de l'un des tubes (1), dont la longueur est supérieure ou égale au diamètre extérieur du tube (1) et dont le diamètre (d2) est inférieur au diamètre (d1) du perçage transversal (4);
- un trou borgne (7), dirigé radialement, est ménagé dans l'autre tronçon d'extrémité de la pièce de liaison (3) dont le diamètre (d3) est supérieur au diamètre (d1) du perçage transversal (5), la distance (b) entre l'axe médian de la tige de blocage (6) et le trou borgne (7) étant inférieure à la distance (2a) des axes des perçages transversaux (4, 5);
- une bille métallique (8), dont le diamètre (d4) est inférieur ou égal à la profondeur du trou borgne (7), et qui y est montée coulissante et à ajustement glissant;
- un taraudage (9) débouchant coaxialement dans le trou borgne (7) et dont le diamètre (d5) est inférieur au diamètre (d3) du trou borgne (7);
- un goujon fileté (10) qui peut se visser dans le taraudage (9) et dont l'extrémité touche la bille (8).

2. Dispositif suivant la revendication 1, caractérisé en ce que l'angle entre le rayon de la bille et le rayon vecteur, au point de contact avec le bord inférieur du perçage transversal (5), est compris entre 30° et 45.

3. Dispositif suivant la revendication 1, destiné à raccorder deux parties constitutives d'un bâti, caractérisé en ce que chacun des tubes (1, 2) comporte à faible distance de son extrémité une gorge qui fait tout le tour, dans un plan radial, et qui débouche dans un méplat (12) de la paroi du tube qui s'étend dans un plan perpendiculaire à l'axe du perçage transversal (4, 5), jusqu'à l'extrémité du tube, et en ce qu'une partie latérale (13) en forme de plaque d'un dispositif de bâti comporte une ouverture (14) dont le pourtour est constitué de trois droites se coupant à angle droit et d'une partie hémi-circulaire, et dans laquelle l'extrémité du tube peut être accrochée par sa gorge (11), et en ce qu'un élément de blocage (15) s'appuie, d'une part, sur la partie latérale (13) et, d'autre part, sur le méplat (12) du tube (1, 2).

4. Dispositif suivant la revendication 3, caractérisé en ce que l'élément de blocage (15) est une pièce en tôle (17) coudée sensiblement à angle droit, et comprenant un bord intérieur se prolongeant en deux parties saillantes (16) latérales et plus long que le diamètre intérieur horizontal de l'ouverture (14), deux pattes (18) coudées à 90°, issues des bords latéraux verticaux de la pièce de tôle (17) coudée et à une distance l'une de l'autre qui correspond au diamètre intérieur de l'ouverture (14), et un bord supérieur (19) coudé qui peut être introduit dans une fente (21) de la partie latérale (13), audessus de l'ouverture (14) et qui peut être reliée par complémentarité de formes avec la partie (13).

FIG 1

FIG 2

FIG 3

FIG 4